(19) Europäisches Patentamt / European Patent Office / Office européen des brevets

(11) **EP 1 865 282 A1**

(12) **EUROPEAN PATENT APPLICATION**
published in accordance with Art. 158(3) EPC


(43) Date of publication:
**12.12.2007 Bulletin 2007/50**

(21) Application number: **06729372.0**

(22) Date of filing: **17.03.2006**

(51) Int Cl.:
***G01B 21/30*** *(2006.01)* ***G01N 21/84*** *(2006.01)*
***B05D 3/00*** *(2006.01)*

(86) International application number:
**PCT/JP2006/305382**

(87) International publication number:
**WO 2006/101041 (28.09.2006 Gazette 2006/39)**

(84) Designated Contracting States:
**DE GB**

(30) Priority: **22.03.2005 JP 2005081809**



(71) Applicant: **HONDA MOTOR CO., LTD.**
**Tokyo 107-8556 (JP)**

(72) Inventors:
- **IKEHARA, Shinichi**
**hi, Saitama 3510193 (JP)**
- **KOJIMA, Keisuke**
**hi, Saitama 3510193 (JP)**

(74) Representative: **Hall, Matthew Benjamin**
**Frank B. Dehn & Co.**
**St Bride's House**
**10 Salisbury Square**
**London EC4Y 8JD (GB)**


# (54) COATING APPEARANCE EVALUATION METHOD AND COATED ARTICLE


(57) A new, simple, and easy coating appearance evaluation method which has a point of origin for consumer preference with respect to the coating in which wavelength coexist is found to provide a coated article having a coating level of consumer satisfaction ; a method for producing thereof; and an apparatus for evaluating an coating appearance. A coating appearance evaluation method, in which, among surface swells of a coating, the amplitude of the swell with a wavelength in the range of 1 to 10 mm are selectively measured, and a coating appearance of the surface of the coating is evaluated by the sizes of the resulting measurement thereof.


FIG. 8

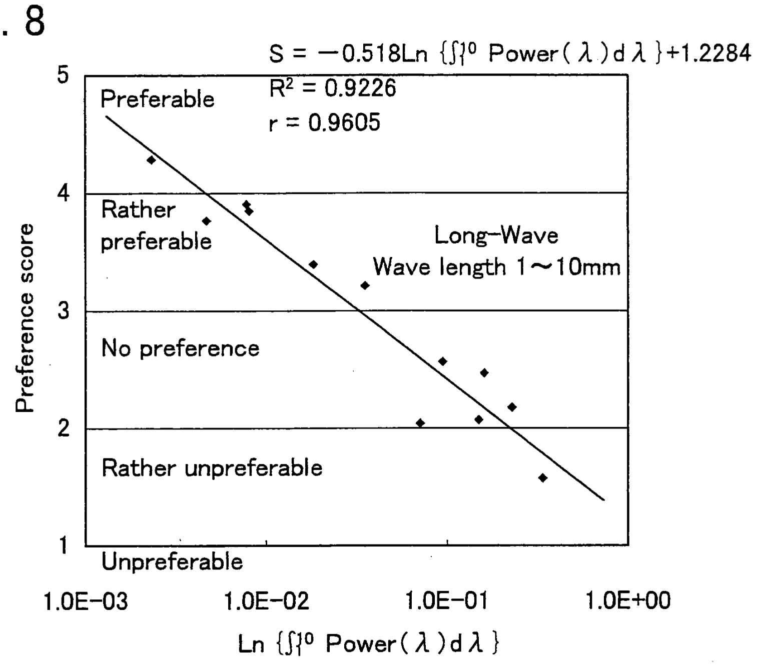


EP 1 865 282 A1

## Description

TECHNICAL FIELD

The present invention relates to a coating appearance evaluation method and a coated article, and more specifically relates to a new appearance evaluation method regarding a coating of automotive finishes. More specifically, the present invention relates to a new method for evaluating a coating based on consumer preference research, and an automotive coated article and the like, which are coated and have a level of consumer satisfaction thereby.

BACKGROUND ART

A designed appearance of an automotive finishes is roughly classified according to the texture sensed by an extent of surface roughness, such as gloss, smoothness, crispness and swell, types of color pigment, and texture sensed by an extent of orientation of sheer materials (such as lightness, saturation, shade, density, length, and depth). Among these, the texture sensed by an extent of surface roughness has a big influence on product appeal so that it differentiates grades of automobiles. Thus, various kinds of approaches have been accomplished by each car manufacturer in order to improve quality.
Conventionally, preferences vary since these textures are sensual, hence without touching this preference, instead the feel of the material that consumers senses is fragmented, thereby using a method that quantitatively evaluates the sense. In addition, an appearance measurement method and an appearance measuring machine for quantifying textures have been disclosed in a number of related art documents.
For example, as described in Patent Document 1, a sense of gloss relates to a component with a wavelength of 0.1 mm or less, a sense of flesh relates to that of 0.1 to 1 mm, and sense of smoothness relates to that of 1 to 10 mm; and a method for quantifying each texture by separating disturbance of a light and dark slit pattern which is projected onto the surface of the coated article into a plurality of frequency levels is proposed.
In addition, in Patent Document 2, a method for quantifying the sense of crispness with a light and dark pattern light is proposed. Quantifying each of these wavelengths or these textures is very useful for materials and designing tools.

Patent Document 1: Japanese Patent No. 2588297
Patent Document 2: Japanese Unexamined Patent Application Publication No. 11-194096

DISCLOSURE OF THE INVENTION

Problem to be Solved by the Invention

In the related art, however, the relationship between weighting and preference sensed by consumers and the wavelength component with respect to the coating in which wavelengths coexist has not been considered. In car manufacturers, using an appearance measuring machine depending on each car manufacturer, automobiles are commercialized and provided based on acceptance criteria in which the weighting is ambiguous.
One object of the present invention is to find a new, simple, and easy coating appearance evaluation method which has a point of origin for consumer preference with respect to the coating in which wavelengths coexist, whereby a coating level that highly satisfies consumers and that is clarified by the estimating method, and a coated article having the coating level that satisfies consumers is provided; a method for producing thereof; and an apparatus for evaluating a coating appearance. Means for Solving the Problem
The present inventors have conducted extensive research in order to solve the problems described above. As a result, they have found that the problems may be solved by paying attention to an amplitude of a specific swell and evaluating a coating appearance by using measured data, thereby achieving the present invention. More specifically, the present invention provides what is described below.
According to a first aspect of the present invention, a coating appearance evaluation method is provided in which, among surface swells of a coating, the amplitude of the swell with a wavelength in the range of 1 to 10 mm is selectively measured, and a coating appearance of the surface of the coating is evaluated by the sizes of the resulting measurement thereof.
The coating appearance evaluation method according to the first aspect of the present invention includes selectively measuring an amplitude of a swell with a wavelength of 1 to 10 mm from a surface swell, and evaluating the coating appearance based on the measured result. Since the evaluation method according to the first aspect of the present invention selectively uses an amplitude of a swell with a wavelength of 1 to 10 mm, which is the wavelength obtained most for the weighting or preference sensed by consumers, an appearance of a coating can be evaluated by adding the consumer preference. Thus, when the evaluation method according to the first aspect of the present invention is used rather than those based on various conventional ambiguous acceptance criteria, a finish which meets more the consumer preference and a finished article of higher product appeal can be provided.

Since in predicting preferences called likes and dislikes by a variety of individual differences, a complex relationship that correlates multiple variables can be considered, it is necessary to know clearly how consumers are impressed when they observe the finished article. Thus, in the present invention, in order to clarify the type of texture and weighting thereof sensed when consumers observe the finished article, factor analysis using unified terms expressing various kinds of coating textures was conducted by using several kinds of panels with different surface roughness. As a result, the following two factors were extracted.

The first factor was "smooth-unsmooth discrimination axis", which was a main factor having a factor contribution of 78%. The second factor was "sense of thickness discrimination axis", which was a subsidiary factor having a factor contribution of 17%. Specifically, consumers observe the coated article based on the smooth-unsmooth discrimination axis mainly.

In the present invention, the type and weighting of textures that consumers sensed when observing was clarified, and then relationships among the type, the weighting and the preference were researched. As a result, there was a strong linear correlation with the preference only in "smooth-unsmooth discrimination axis", on the other hand, there were no correlations with the preference in "sense of thickness discrimination axis". Accordingly, the consumer preference is determined based on one axis, the simple "smooth-unsmooth discrimination axis".

In addition, what types of wavelength components of the swell with respect to the coating "the smooth-unsmooth discrimination axis" relates to was researched by conducting Fourier transformation for three-dimensional surface roughness data of the coating, defining a square of the amplitude of the swell with each wavelength as Power, and then examining an integral value ($\int_X^Y Power(\lambda)d\lambda$) of a Power curve which was a wavelength distribution of Power at a wavelength of X to Y mm, with respect to various dissection wavelengths. As a result, it was confirmed that there was a correlation to a long wavelength swell of 1 to 10 mm.

Accordingly, it is summarized that the consumer preference may almost be explained only by the amplitude of the swell component with a wavelength of 1 to 10 mm.

Conventionally, people in the coating industry have reduced amplitudes of swells with all wavelength components, such as a medium wavelength of 0.1 to 1 mm and a short wavelength of 0 to 0.1 mm, as well as a wavelength component of 1 to 10 mm based on the same weighting. However, based on the result of this research, it was found that a medium or shorter wavelength was detected at some levels as the consumer preference, but little was used as the preference determination. Going to extremes, for example, in a case where the amplitude of the swell with the long wavelength component is reduced, there is a trade off relation with reducing that of the medium wavelength component, whereby the amplitude of the swell with the medium wavelength component may be sacrificed by reducing that of the long wavelength component.

According to a second aspect of the present invention, a coating appearance evaluation method includes evaluating the coating appearance based on a preference score S as an evaluation criterion obtained by adding information regarding a consumer preference to at least one selected from (a) an integral value ($\int_1^{10} Power(\lambda)d\lambda$) of a Power curve which is a wavelength distribution of Power at a wavelength in the range of 1 to 10 mm obtained by conducting Fourier transformation for three-dimensional surface roughness data of the coating, and defining a square of an amplitude of a swell with each wavelength as Power; (b) an arithmetic mean swell (Wa) with a wavelength in the range of 1 to 10 mm; and (c) a swell (Wd) determined by a coating appearance measuring machine "WaveScan-DOI (trade name)" from BYKGardner.

"Preference score S" obtained by adding information regarding the consumer preference is an index indicating the likes and dislikes considered as sensitive with respect to a consumer's incentive to purchase, rather than whether or not the coating is good or satisfactory. The higher the preference score is, the more the consumer preference is met, which means that product appeal as the incentive for purchasing is high.

The integral value expressed by (a) ($\int_1^{10} Power(\lambda)d\lambda$) is an integral value (area ($\mu m^3$) surrounded with a Power curve and a wavelength axis) of a Power curve which is a wavelength distribution of Power at a wavelength in the range of 1 to 10 mm obtained by collecting data of 11 roughness curves at an X-axis evaluation length of 52 mm, an X-axis sampling pitch of 10 $\mu$m, and a Y-axis pitch of 4 mm (cut off $\lambda c$ is 50 mm, and a wave 50 mm or more wavelength component was cut off in advance in order to remove an influence from warpage of a test piece material) by a three-dimensional surface roughness meter, by conducting Fourier transformation for multiplication of sample data to obtain a Fourier function and defining a square of an amplitude of a swell with each wavelength as Power. The smaller this value is, the smoother the swell is.

The arithmetic mean swell (Wa) expressed by (b) is an arithmetic mean swell defined as $Wa=1/L\int_0^L|Z(x)|dx$ based on JISB06014.2.1. In the present invention, profile curve data is collected at an X-axis evaluation length of 52 mm and a sampling pitch of 10 $\mu$m, 1 mm or less of wavelength component is cut off with 1 mm of a low pass cut off filter, and $Wa=1/L\int_0^L|Z(x)|dx$ is calculated from a swell curve obtained by cutting off 10 mm or longer of wavelength component being cut off with 10 mm of a high pass cut off filter. The smaller this value is, the smoother the swell is. In the expression (2), L is an evaluation length, and Z(x) is a waviness curve function with cutoff values of 1 mm and 10 mm.

To utilize "preference score S" in the present invention as an appearance evaluation index, it is unsurprisingly desirable that the index can be calculated under any situation, such as material development, coating method development, and quality control. The coating appearance evaluation method of the present invention must obtain the same evaluation result with respect to any coating, despite the coating method and materials of the coating.

The integral value ($\int_1^{10}$Power(λ)dλ) expressed by the abovementioned (a) and the arithmetic mean swell (Wa) expressed by the abovementioned (b) can be calculated in a laboratory at a development phase. However, these expressions are unsuitable for measuring a real car on quality control in a production line, market research, or the like. Thus, by using any mobile appearance measuring machine data expressing a wavelength swell of 1 to 10 mm, the inventors have studied about calculation of the preference score. As a result, it was found that the parameter "Wd" by the WaveScan-DOI measuring machine has the most suitable correlation.

FIGS. 1 and 2 are diagrams showing correlations between the parameter "Wd" by the WaveScan-DOI measuring machine and the arithmetic mean swell (Wa) expressed by the abovementioned (b). As shown in FIGS. 1 and 2, Wd has a higher correlation with the arithmetic mean swell (Wa) with a wavelength in the range of 1 to 10 mm than that with of wavelength in the range of 3 to 10 mm. Thus, it is clear that parameter "Wd" obtained by the WaveScan-DOI measuring machine can be used as information of the coating appearance evaluation method.

Thus, in the present invention, "preference score S" can be calculated by the integral value ($\int_1^{10}$Power(λ)dλ) expressed by (a), the arithmetic mean swell (Wa) expressed by (b), or the swell (Wd) expressed by (c), which is obtained by the coating appearance measuring machine "WaveScan-DOI" from BYKGardner in a laboratory. In addition, through measuring a real car at quality control in a product line and market research, "preference score S" can be calculated by the swell (Wd) obtained by the coating appearance measuring machine "WaveScan-DOI" from BYKGardner.

Since the same "preference score S" can be obtained in the present invention as in any situation, a calculation parameter can be selected depending on the situation.

The swell (Wd) expressed by (c), which is obtained by the coating appearance measuring machine "WaveScan-DOI" from BYKGardner, is one of so many parameters, and typically represents the amplitude of the swell component with a wavelength in the range of 3 to 10 mm. However, as described above, the correlation with the value Wd is high with the arithmetic mean swell (Wa) with a wavelength in the range of 1 to 10 mm, which indicates the smaller the value is, the smoother the swell is.

Generally, the integral value "$\int_1^{10}$Power(λ)dλ" specified by (a), the arithmetic mean swell "Wa" expressed by (b), and the swell "Wd" expressed by (c) indicate a swell expressing orange peel, and a long wavelength swell, a sense of smoothness, or the like.

"Orange peel" used in the coating industry refers to a phenomenon in which a coated surface is an uneven coating skin like a skin of an orange. The coating dries before the coating becomes smooth in the process of forming the coating from the coating fluid. Factors by which orange peel occurs include: environmental factors such as high temperature and high wind speed; factors in facilities or devices, in which an aperture of a spray gun is large so that the coating fluid is not sufficiently microparticulated, or the pattern of the spray is defective, for example; factors in aspects of coating works such as thin coatings, low air pressure, small discharge volume, and slow spray gun speed; and factors in aspects of materials such as fast evaporation speed due to an inappropriate diluent selected, high coating viscosity, and low flow malleability of the coatings.

According to the coating appearance evaluation method of the second aspect of the present invention, the evaluation to which the consumer preference is added can be conducted by using measurement data with respect to a wavelength obtained most for the weighting or the preference sensed by consumers. Thus, the finished product, which meets the consumer preference and has higher product appeal can be provided by using the evaluation method according to the second aspect of the present invention when compared to the evaluation method based on various ambiguous conventional acceptance criteria as standards.

According to a third aspect of the present invention, in the coating appearance evaluation according to the second aspect of the present invention, the preference score S is at least one selected from the preference score S1 expressed by the expression (1), the preference score S2 expressed by the expression (2), and the preference score S3 expressed by the expression (3).

$$S1 = -0.518 \, Ln\{\int_1^{10} Power(\lambda)\, d\lambda\} + 1.2284 \quad \text{Expression (1)}$$

$$S2 = 4.9052 \, EXP^{-4.2213Wa} \quad \text{Expression (2)}$$

$$S3 = 4.6471Wd^{-0.3041} \quad \text{Expression (3)}$$

The reference scores S1 to S3 are integers from 1 to 5 and indicated by an index including 1: unpreferable, 2: rather unpreferable, 3: no preference, 4: rather preferable, and 5: preferable.

According to the coating appearance evaluation method according to the third aspect of the present invention, the evaluation can be conducted based on the preference score S as a evaluation criterion which is calculated with the specific expression by using measurement data with respect to a wavelength obtained most for the weighting or the preference sensed by consumers and the consumer preference is added. Thus, by using the evaluation method according to the third aspect of the present invention, it can be evaluated whether or not the coating meets the consumer preference, and product appeal as an incentive for purchase is high.

According to a fourth aspect of the present invention, a method for producing a coated article includes a step of evaluating by the coating appearance evaluation method according to any one of the first to third aspects of the present invention.

The method for producing a coated article according to the fourth aspect of the present invention includes a step of evaluating by the coating appearance evaluation method according to any one of the first to third aspects of the present invention. The method for producing a coated article according to the fourth aspect of the present invention includes a step of obtaining the evaluation to which the consumer preference is added by using measurement data with respect to a wavelength obtained most for the weighting or the preference sensed by consumers into a production process. Thus, according to the production method according to the fourth aspect of the present invention, a coated article which meets the consumer preference and has a higher product appeal can be provided by sorting by way of the evaluation results from the evaluation step.

According to a fifth aspect of the present invention, a coated article obtained by coating a coated object is provided in which, a preference score S is 3.7 or more of a substantially horizontal part and 3.0 or more of a substantially vertical part, and the preference score S is obtained by adding information regarding consumer preference to at least one selected from:(a) an integral value ($\int_1^{10}$Power(λ)dλ) of a Power curve, which is a wavelength distribution of Power at a wavelength in the range of 1 to 10 mm by conducting Fourier transformation for three-dimensional surface roughness data of the coating, and defining a square of an amplitude of a swell with each wavelength as Power; (b) an arithmetic mean swell (Wa) with a wavelength in the range of 1 to 10 mm; and(c) a swell (Wd) determined by a coating appearance measuring machine "WaveScan-DOI (trade name)" from BYKGardner.

When the finished product is researched and developed, it is important to determine a target point, that is to say, to determine how many points on the preference score axis meets at least the consumer preference. The point is determined by a car manufacturer providing articles, but should not be determined for convenience of the car manufacturer, nor for preference of people in the coating industry. The target value of the preference score S should be determined from the point of view of consumers.

The present inventors conducted research among general consumers by using a bonnet as a horizontal part and a door skin as a vertical part as coated articles having various levels of the preference score S. As a result, the levels desired by consumers resulted in the preference score S ≥ 3.7 of the horizontal part and the preference score S ≥ 3.0 of the vertical part being obtained among popular cars.

For example, the level of 3.7, which is the target value of the horizontal part, is approximately equivalent with a Wd of less than 2 and a tension meter of 18, and the level of 3.0, which is the target value of the vertical part, is substantially equivalent with a Wd of less than 4.0 and a tension meter of 17.

On the other hand, the preference score S of the horizontal part is 2.1 to 2.3, which is equivalent to a Wd of 11 to 13, and tension meter of 13 to 15 among popular cars in the market. In addition, the preference score S of the vertical part of the popular car is 1.8 to 2.0, which is equivalent to a Wd in the range of 20 to 25, and tension meter of 10 to 12.

Thus, there is a big difference between a consumer's level of requirement and a common sense level in the industry. However, there is a mission in which the article enabling satisfaction to consumers is provided without dwelling on the constraint, a so-called limitation concerning coating in automotive coating development.

In the coated article according to the fourth aspect of the present invention, the coating satisfying the required level of customers has the preference score S ≥ 3.7 of the horizontal part, and the preference score S ≥ 3.0 of the vertical part. These scores are met by smoothing the long wavelength swell component with wavelength in the range of 1 to 10 mm among the surface swells of the coating. Also, only the component of the swell with the long wavelength should receive attention, and consideration of the component of short-medium wavelength is not particularly required. For example, the short wavelength component influences the sense of gloss, and in the category of a two-coat one-bake top coating method in which a color base coat and a transparent clear coat paint are applied wet-on-wet, the short wavelength component makes little difference; however, a superior appearance depends only on the refractive index of the clear coat, and is irrelevant of roughness. Among popular cars, no automobile bodies or installed parts currently exist with an amplitude of a swell with a wavelength in the range of 1 to 10 mm, to which attention is paid in the measuring method of the present invention, is selectively evaluated, and a coating is applied.

The coated article according to the fifth aspect of the present invention has the evaluation obtained by evaluating the weighting and the preference sensed by consumers and added consumer preference, using measurement data with respect to the wavelength obtained most, which is higher than the level that consumers require. Accordingly, the coated article according to the fifth aspect of the present invention is one which meets the consumer preference, so that a coated article having a high coating with an appealing product as an incentive for buying can be provided.

According to a sixth aspect of the present invention, in the coated article according to the fifth aspect of the present invention, the coated article is an automotive body or automotive part.

The coated article according to the sixth aspect of the present invention is used as an automotive body or an automotive part. In the coated article according to the sixth aspect of the present invention, in order to produce the automotive body and the automotive part having the evaluation to which the consumer preference is added, which is at least the level required by consumers, automobiles having a high grade and product appeal can be provided by using this coated article.

According to a seventh aspect of the present invention, a program used in an apparatus for evaluating an appearance of a coating, the apparatus includes: an input unit in which information with respect to the smoothness of the coating is input; a storage unit for storing an arithmetic expression expressed by the following expressions (1), (2) and (3) in advance, whereby a preference score S is calculated by adding information with respect to the consumer preference to the information with respect to the smoothness of the coating; a computing unit for calculating a preference score S according to the arithmetic expression; a determining unit for determining acceptance when the preference score S is higher than a predetermined value; and an output unit for outputting a determination result, in which the information with respect to the smoothness of the coating is defined as at least one selected from:(a) an integral value ($\int_1^{10}Power(\lambda)d\lambda$) of a Power curve which is a wavelength distribution of Power at a wavelength of 1 to 10 mm obtained by conducting Fourier transformation for three-dimensional surface roughness data of the coating, and defining a square sum of an amplitude of a swell with each wavelength as Power; (b) an arithmetic mean swell (Wa) with a wavelength in the range of 1 to 10 mm; and (c) a swell (Wd) determined by a coating appearance measuring machine "WaveScan-DOI (trade name)" from BYKGardner, the following expressions (1), (2) and (3) are called from the storage unit appropriately, based on information input into an input means, S1 being calculated with the computing unit by applying the expression (1) when (a) is input, S2 being calculated with the computing unit by applying the expression (2) when (b) is input, S3 being calculated with the computing unit by applying the expression (3) when (c) is input, and the respective S1, S2 and S3 calculated by determining whether or not these values are more than the predetermined values, and the determining result being output to the output unit, whereby executing the evaluation of the coating appearance by a computer.

$$S1 = -0.518 Ln\{\int_1^{10} Power(\lambda)\, d\lambda\} + 1.2284 \quad \text{Expression (1)}$$

$$S2 = 4.9052 EXP^{-4.2213Wa} \quad \text{Expression (2)}$$

$$S3 = 4.6471 Wd^{-0.3041} \quad \text{Expression (3)}$$

In the program according to the seventh aspect of the present invention, from the step of executing the calculation to which the consumer preference is added, based on measurement data with respect to the smoothness of the wavelength obtained most for the weighting or the preference sensed by consumers, to the step of determining acceptance when consumer satisfaction is obtained can be conducted. Thus, in the program according to the seventh aspect of the present invention, it is possible to easily determine whether or not the coating appearance reaches the required level of consumers. Accordingly, by executing the program according to the seventh aspect of the present invention, only a coated article having product appeal can be provided selectively for.consumers.

According to a eighth aspect of the present invention, an apparatus for evaluating the appearance of an coating includes: an input unit in which information with respect to the smoothness of a coating is input; storage for storing an arithmetic expression expressed by the following expressions (1), (2) and (3) in advance, whereby the preference score S is calculated by adding information with respect to the consumer preference to the information with respect to the smoothness of the coating; a computing unit for calculating a preference score S according to the arithmetic expression; a determining unit for determining acceptance when the preference score S is higher than a predetermined value; and an output unit for outputting a determination result, in which the information with respect to smoothness of the coating being defined as at least one selected from: (a) an integral value ($\int_1^{10}$Power(λ)dλ) of a Power curve which is a wavelength distribution of Power at a wavelength in the range of 1 to 10 mm obtained by conducting Fourier transformation for three-dimensional surface roughness data of the coating, and defining a square sum of an amplitude of a swell with each wavelength as Power; (b) an arithmetic mean swell (Wa) with a wavelength in the range of 1 to 10 mm; and (c) a swell (Wd) determined by a coating appearance measuring machine "WaveScan-DOI (trade name)" from BYKGardner, the following expressions (1), (2) and (3) being called from the storage unit appropriately, based on information input into an input means, S1 being calculated with the computing unit by applying the expression (1) when (a) is input, S2 being calculated with the computing unit by applying the expression (2) when (b) is input, S3 being calculated with the computing unit by applying the expression (3) when (c) is input, and the respective S1, S2 and S3 calculated being determined whether or not the values thereof are more than a predetermined value, and the determining result is output to the output unit.

$$S1 = -0.518 Ln\{\int_1^{10} Power(\lambda)\, d\lambda\} + 1.2284 \quad \text{Expression (1)}$$

$$S2 = 4.9052 EXP^{-4.2213Wa} \quad \text{Expression (2)}$$

$$S3 = 4.6471 Wd^{-0.3041} \quad \text{Expression (3)}$$

In the apparatus according to the eighth aspect of the present invention, the method from the step of executing the calculation to which the consumer preference is added, based on measurement data with respect to the smoothness of the wavelength obtained most for the weighting or the preference sensed by consumers, to the step of determining acceptance when consumer satisfaction is obtained can be automatically conducted. Therefore, in the apparatus according to the eighth aspect of the present invention, it is possible to easily determine whether or not the coating appearance meets the required level of consumers. Accordingly, only a coated article with product appeal can be provided selectively for consumers.

Effect of the Invention

Since the present invention is a coating appearance evaluation method which has a point of origin for consumer preference, it can determine whether or not the coating has high coating level of consumer satisfaction. In addition, according to the production method including a step of evaluating by the evaluation method of the present invention, a coated article can be provided having a higher degree of consumer satisfaction thus a higher product appeal and grade due to meeting the consumer preference by sorting with evaluation results from the evaluation step. Furthermore, the program and the apparatus according to the present invention can automatically determine acceptance when the coating having consumer satisfaction is obtained, so that only a coated article is selected to be provided for consumers.

BRIEF DESCRIPTION OF DRAWINGS

FIG. 1 is a diagram showing a correlation between "Wd" and the arithmetic mean swell (Wa).
FIG. 2 is a diagram showing a correlation between "Wd" and the arithmetic mean swell (Wa).
FIG. 3 is a diagram showing the unified terms that are used and weighting criteria thereof for factor analysis.
FIG. 4 is a diagram showing a factor loading to an extraction factor in 11 kinds of unified terms.
FIG. 5 is a diagram showing evaluation criteria with respect to the preference for the coating.
FIG. 6 is a diagram showing a relationship between the smooth-unsmooth score and the preference score.
FIG. 7 is a diagram showing a relationship between the sense of thickness score and the preference score.
FIG. 8 is a diagram showing a relationship between the integral value of a Power curve at a wavelength in the range of 1 to 10 mm and the preference score.
FIG. 9 is a diagram showing a relationship between the integral value of a Power curve at a wavelength in the range of 0.1 to 1 mm and the preference score.
FIG. 10 is a diagram showing a relationship between the arithmetic mean swell (Wa) with a wavelength in the range of 1 to 10 mm and the preference score.
FIG. 11 is a diagram showing a relationship between the arithmetic mean swell (Wa) with a wavelength in the range of 0.1 to 1 mm and the preference score.
FIG. 12 is a diagram showing a relationship between the swell (Wd) by WaveScan-DOI (trade name) and the preference score.

EXAMPLE

The present invention is explained based on Examples in more detail, but not as to be limited thereby.

Example 1

Preparation of Sample

12 types of samples were prepared before the evaluation was conducted. For these samples, the amplitude of the wavelength component corresponding to the conventionally expressed texture is shown in Table 1. Since the evaluation requires a relationship between surface unevenness and preference to be obtained, the color of the samples was standardized in solid black, which has the highest unevenness detectability, at which panelists observed in order to remove a coating color factor.

Table 1

| Appearance modeling | Sence of gross～Sence of crispness | Sence of swell |
|---|---|---|
| Wavelength image | Short | Long |
| No. | Swell amplitude | |
| 1 | Small | Small |
| 2 | Small | Medium |
| 3 | Small | Medium～Large |
| 4 | Small | Large |
| 5 | Medium | Small |
| 6 | Medium | Medium |
| 7 | Medium | Medium～Large |
| 8 | Medium | Large |
| 9 | Large | Small |
| 10 | Large | Medium |
| 11 | Large | Medium～Large |
| 12 | Large | Large |

Consumers

For the coating appearance evaluation by consumers, 127 Japanese and Americans having no knowledge of coatings, as shown in Table 2 were selected as panelists.

Table 2

| Japan | 20s | 30s | 40s | 50s |
|---|---|---|---|---|
| Male | 15 | 7 | 8 | 6 |
| Female | 11 | 9 | 4 | 7 |
| | | | | |

(continued)

| US | 20s | 30s | 40s | 50s |
|---|---|---|---|---|
| Male | 16 | 15 | 7 | 3 |
| Female | 9 | 7 | 2 | 1 |

Unified Terms

For purpose of clarifying the types of textures sensed when consumers observed the coated article and weighting thereof, the coating appearances for 12 types of samples were visually evaluated by way of the unified terms for expressing coating textures, in order to perform a factor analysis by using the unified terms for expressing various kinds of coating textures. FIG. 3 shows unified terms and weighting criteria thereof.

Unified Term Scores

Table 3 shows average values (unified term scores) of the results evaluated by 127 panelists for each sample with respect to 11 kinds of unified term items.

Table 3

| | Unified term score | | | | | | | | | | |
|---|---|---|---|---|---|---|---|---|---|---|---|
| Sample No. | Image reflection | Smoothness | Coating thickness | Lavishness | Beauty | Swell depth | Stateliness | Distinction | Flesh | Gloss | Glare |
| 1 | 4.64 | 4.18 | 4.21 | 3.87 | 4.61 | 4.60 | 3.99 | 4.45 | 4.03 | 4.48 | 3.46 |
| 2 | 4.91 | 5.33 | 3.76 | 4.16 | 5.12 | 5.06 | 3.60 | 4.87 | 3.88 | 4.58 | 3.61 |
| 3 | 1.99 | 2.54 | 4.81 | 3.66 | 2.66 | 2.37 | 4.90 | 2.84 | 4.87 | 2.70 | 4.16 |
| 4 | 2.66 | 3.57 | 4.33 | 3.67 | 3.09 | 3.03 | 4.75 | 3.42 | 4.55 | 3.39 | 3.79 |
| 5 | 5.00 | 5.12 | 3.81 | 3.88 | 5.09 | 5.19 | 3.76 | 4.73 | 3.79 | 4.49 | 3.25 |
| 6 | 3.40 | 3.81 | 4.31 | 3.61 | 3.45 | 3.49 | 4.45 | 3.42 | 4.40 | 3.37 | 3.55 |
| 7 | 2.70 | 3.39 | 4.42 | 3.72 | 2.96 | 3.01 | 4.78 | 3.27 | 4.36 | 3.33 | 3.90 |
| 8 | 2.82 | 3.27 | 4.39 | 3.63 | 3.24 | 3.28 | 4.55 | 3.30 | 4.27 | 3.57 | 3.55 |
| 9 | 4.58 | 4.21 | 4.04 | 4.07 | 4.60 | 4.43 | 3.90 | 4.36 | 4.15 | 4.45 | 3.15 |
| 10 | 3.39 | 3.34 | 4.51 | 3.76 | 3.52 | 3.45 | 4.51 | 3.52 | 4.34 | 3.88 | 3.81 |
| 11 | 5.76 | 6.06 | 4.01 | 4.43 | 5.72 | 5.76 | 3.16 | 5.69 | 3.70 | 5.28 | 4.04 |
| 12 | 5.37 | 5.34 | 4.15 | 4.19 | 5.28 | 5.12 | 3.66 | 5.36 | 4.04 | 4.70 | 3.61 |

Factor Analysis

From the obtained unified term scores, factor analysis was conducted. The factor analysis refers to a statistical analysis technique for organizing the number of factors by using multivariable analysis to understand the entire scope with fewer essential factors, when various and complex factors are not clear. In this evaluation, 11 kinds of unified terms are equivalent to complex and various factors.

In this evaluation, the second factor was extracted as a criterion in which an eigenvalue is 1 or more with a common method for multivariable analysis. On evaluating, 11 kinds of unified term scores for each sample are defined as X1, X2 ..., X11, and the unified term scores can be represented by the following expressions when the calibers of the two extracted factors are defined as F1 and F2. Here, the calibers of the two extracted factors F1 and F2 varies depending on the samples. Furthermore, a is defined as a factor loading and a weight corresponding to a correlation coefficient with unified terms and the two extracted factors. In addition, E1, E2, ..., E11 represent errors.

$$X1 = a11 \cdot F1 + a12 \cdot F2 + E1$$
$$X2 = a21 \cdot F1 + a22 \cdot F2 + E2$$
$$\cdot$$
$$\cdot$$
$$X11 = a111 \cdot F1 + a112 \cdot F2 + E11$$

Based on these expressions, an eigenvalue and contribution of each factor can be determined as shown in Table 4. The eigenvalue sometimes refers to a square sum and represents a dispersion, namely an extent of an influence of a factor, and in the Examples, the eigenvalue is a value after the varimax rotation. Also, the contribution is a value which divides a fixed value by the number of the unified terms.

Table 4

| | Factor loading on first factor | Factor loading on second factor |
|---|---|---|
| Unified term score X1 | a11 | a12 |
| Unified term score X2 | a21 | a22 |
| · | · | · |
| · | · | · |
| Unified term score X11 | a111 | a112 |
| Eigenvalue =Square sum = ΣFactor loading^2 | Σai1^2 | Σai2^2 |
| Contribution | (Σai1^2)*100/11 | (Σai2^2)*100/11 |

In this evaluation, two factors, "smooth-unsmooth discrimination axis" and "the sense of thickness discrimination axis", were extracted by the factor analysis. The results obtained by the factor analysis are shown in Table 5.

Table 5

| Factor No. | Eigenvalue =Square sum | Contribution (%) | Cumulative distribution(%) |
|---|---|---|---|
| 1 | 8.62 | 78.34 | 78.34 |
| 2 | 1.86 | 16.87 | 95.21 |

The first factor, "smooth-unsmooth discrimination axis", was a main factor having a factor contribution of 78%. The second factor, "sense of thickness discrimination axis", was a subsidiary factor having a factor contribution of 17%. Accordingly, consumers observe the coating based on the smooth-unsmooth discrimination axis mainly. Factor Loadings for Two Factors

FIG. 4 shows factor loadings for two factors in 11 kinds of the unified terms. Preference for Coatings

Preferences for coatings of 12 types of samples were visually evaluated by points out of 5 points obtained by 127 panelists. The evaluation criterion is shown in FIG. 5. Preference and Factor Relationship

FIG. 6 is a diagram showing a relationship between the smooth-unsmooth score and the preference score obtained by 127 panelists. As shown in FIG. 6, a correlation was found between the smooth-unsmooth factor score and the preference score. FIG. 7 is a diagram showing a relationship between the sense of thickness score and the preference score. As shown in FIG. 7, no correlation was found between the sense of thickness factor score and the preference score. Accordingly, it was found that a factor to be directly connected to the consumer's incentive for purchase was the "smooth-unsmooth discrimination axis". Sense of Smoothness Measurement

The various senses of smoothness for 12 types of samples were measured. The results are shown in Table 6. The measurement conditions for the measured sense of smoothness were as follows. Wa

The arithmetic mean swell (Wa) was determined by $Wa=1/L\int_0^L|Z(x)|dx$ based on JISB06014.2.1.

L: evaluation length

Z(x): waviness curve function

Waviness curve: outline curve obtained by filtering profile curves with an outline curve filter of cutoff values, λf and λc, sequentially

The long wavelength component was cut off with a λf filter, and the small wavelength component was cut off with a λc filter.

Power

By using a surface roughness measuring machine Surftest SV-3000S4.3D (from Mitutoyo, stylus nose radius: 5 μm, stylus nose angle: 90 degrees) as a three-dimensional surface roughness meter, and dividing into a long wavelength of 1 mm or more and a small wavelength of less than 1 mm, Power was determined as follows.

Long Wavelength of 1 mm or More

Data of 11 roughness curves were collected at an X-axis evaluation length of 52 mm, an X-axis sampling pitch of 10 μm, and a Y-axis pitch of 4 mm (cut off λc was 50 mm, and 50 mm or more of a wavelength component was cut off in advance in order to remove any influence from warpage of low material of a test piece) by a three-dimensional surface roughness meter, by conducting Fourier transformation for multiplicative sample data and defining a square of an amplitude of a swell with each wavelength as Power ($\mu m^{\lambda 2}$).

Small Wavelength of 1 mm or Less

In a similar way to the long wave, data of 11 roughness curves were collected at an X-axis evaluation length of 10 mm, an X-axis sampling pitch of the of 1 μm, and a Y-axis pitch of 4 mm (cut off λc was 2.5 mm, and 2.5 mm or more of wavelength component was cut off in advance in order to remove any influence from the long wavelength from the surface) by a three-dimensional surface roughness meter, by conducting Fourier transformation for multiplicative sample data and defining a square of an amplitude of a swell with each wavelength as Power ($\mu m^{\lambda 2}$).

Table 6

| Sample | Preference score | ∫$_X^Y$ Power (λ) dλ (X~Y) | | | | | | | | Wa (μm) | | |
|---|---|---|---|---|---|---|---|---|---|---|---|---|
| | | 0.1~0.3 | 0.3~1.0 | 0.05~1.0 | 0.1~1.0 | 1.0~3.0 | 1.0~10.0 | 3.0~10.0 | 10.0~50.0 | 0.1~1.0 | 1.0 ~10.0 | 10.0 ~50.0 |
| 1 | 3.22 | 2.00E-04 | 4.00E-04 | 7.00E-04 | 6.00E-04 | 8.00E-04 | 3.45E-02 | 3.37E-02 | 3.99E-01 | 0.009333 | 0.0840 | 0.5540 |
| 2 | 3.77 | 1.00E-04 | 3.00E-04 | 4.00E-04 | 4.00E-04 | 1.40E-03 | 4.70E-03 | 3.30E-03 | 2.58E-01 | 0.012667 | 0.0463 | 0.6817 |
| 3 | 1.58 | 0 | 1.00E-04 | 2.00E-04 | 1.00E-04 | 2.90E-03 | 3.31E-01 | 2.28E-01 | 4.24E-01 | 0.013333 | 0.2563 | 0.5467 |
| 4 | 2.08 | 0 | 2.00E-04 | 3.00E-04 | 2.00E-04 | 1.10E-03 | 1.48E-01 | 1.47E-01 | 2.31E-01 | 0.011333 | 0.2310 | 0.5053 |
| 5 | 3.86 | 1.00E-04 | 6.00E-04 | 7.00E-04 | 7.00E-04 | 1.80E-03 | 8.00E-03 | 6.10E-03 | 2.26E-01 | 0.015667 | 0.0623 | 0.5787 |
| 6 | 2.58 | 2.00E-04 | 4.00E-04 | 6.00E-04 | 6.00E-04 | 1.00E-03 | 9.34E-02 | 9.24E-02 | 2.22E-01 | 0.012667 | 0.1377 | 1.2650 |
| 7 | 2.05 | 1.00E-04 | 4.00E-04 | 5.00E-04 | 5.00E-04 | 2.10E-03 | 7.10E-02 | 6.89E-02 | 2.16E-01 | 0.013333 | 0.1740 | 0.3807 |
| 8 | 2.18 | 2.00E-04 | 1.00E-03 | 1.30E-03 | 1.20E-03 | 2.50E-03 | 2.27E-01 | 2.25E-01 | 3.37E-01 | 0.017333 | 0.2127 | 0.4280 |
| 9 | 3.39 | 1.00E-04 | 3.00E-04 | 4.00E-04 | 4.00E-04 | 3.00E-04 | 1.82E-02 | 1.80E-02 | 2.20E-01 | 0.008333 | 0.0977 | 0.8073 |
| 10 | 2.47 | 2.00E-04 | 5.00E-04 | 7.00E-04 | 7.00E-04 | 8.00E-04 | 1.60E-01 | 1.60E-01 | 3.72E-01 | 0.012667 | 0.1557 | 0.4247 |
| 11 | 4.29 | 0.00E+00 | 1.00E-04 | 2.00E-04 | 1.00E-04 | 8.00E-04 | 2.30E-03 | 1.60E-03 | 6.75E-01 | 0.009000 | 0.0580 | 1.4580 |
| 12 | 3.91 | 1.00E-04 | 3.00E-04 | 4.00E-04 | 4.00E-04 | 3.00E-04 | 7.90E-03 | 7.60E-03 | 3.22E-01 | 0.008333 | 0.0627 | 0.5863 |

| Sample | Preference score | WaveScan-DOI | | | | | | | | | NSIC* | NSIC | Tension meter |
|---|---|---|---|---|---|---|---|---|---|---|---|---|---|
| | | Wa | Wb | Wc | Wd | We | Longwave | Shortwave | DOI | P-Tention | | | |
| 1 | 3.22 | 5.0 | 10.9 | 3.7 | 3.6 | 6.6 | 0.9 | 7.9 | 97.9 | 19.2 | 96.5 | 92.8 | 20 |
| 2 | 3.77 | 4.3 | 13.1 | 5.8 | 2.6 | 2.5 | 1.4 | 12.0 | 98.4 | 17.6 | 96.3 | 93.5 | 19.5 |
| 3 | 1.58 | 2.1 | 6.1 | 5.1 | 22.5 | 6.2 | 7.3 | 5.6 | 99.6 | 10.5 | 52.9 | 48.4 | 11.5 |
| 4 | 2.08 | 2.8 | 8.6 | 4.3 | 16.8 | 1.0 | 3.2 | 6.7 | 99.1 | 13.5 | 80.9 | 68.8 | 12.5 |
| 5 | 3.86 | 8.2 | 22.5 | 9.1 | 4.3 | 2.4 | 2.3 | 19.7 | 93.4 | 15.7 | 85.6 | 81.3 | 20 |
| 6 | 2.58 | 7.1 | 14.3 | 5.1 | 5.2 | 6.8 | 1.4 | 12.2 | 95.9 | 17.5 | 90.4 | 83.2 | 18.5 |
| 7 | 2.05 | 5.9 | 16.3 | 6.8 | 14.9 | 5.7 | 3.4 | 14.0 | 96.6 | 13.5 | 84.7 | 76.5 | 15.5 |
| 8 | 2.18 | 11.1 | 24.0 | 9.5 | 13.7 | 7.5 | 4.0 | 19.8 | 90.5 | 13.2 | 67.7 | 62.9 | 14 |
| 9 | 3.39 | 6.4 | 10.5 | 3.1 | 2.3 | 3.0 | 0.6 | 7.0 | 98.4 | 20.0 | 94.1 | 94.6 | 19.5 |
| 10 | 2.47 | 7.5 | 13.7 | 4.4 | 6.7 | 5.1 | 1.6 | 10.3 | 95.8 | 16.7 | 87.3 | 79.4 | 15.5 |
| 11 | 4.29 | 2.0 | 5.2 | 3.3 | 1.3 | 1.6 | 0.8 | 5.6 | 100.0 | 19.6 | 96.5 | 93.6 | 20 |
| 12 | 3.91 | 3.9 | 10.0 | 2.6 | 1.2 | 1.2 | 0.4 | 6.8 | 98.5 | 20.0 | 96.3 | 94.8 | 20 |

Correlation with Preference Score and Measurement Result with respect to Sense of Smoothness

Power Curve at Wavelength of 1 to 10 mm

FIG. 8 shows a relationship between the integral values of a Power curve at a wavelength of 1 to 10 mm. As shown in FIG. 8, a correlation was found between the integral value and a Power curve.

Power Curve at Wavelength of 0.1 to 1 mm

FIG. 9 shows a relationship between the integral value of a Power curve at a wavelength of 0.1 to 1 mm and the preference score. As shown in FIG. 9, no correlation was found between the integral value and the preference score.

Arithmetic Mean Swell (Wa) of Wavelength of 1 to 10 mm

FIG. 10 shows the arithmetic mean swell (Wa) with a wavelength of 1 to 10 mm and the preference score. As shown in FIG. 10, a correlation was found between the arithmetic mean swell and the preference score.

Arithmetic Mean Swell (Wa) with Wave Length of 0.1 to 1 mm

FIG. 11 shows the arithmetic mean swell (Wa) with a wavelength in the range of 0.1 to 1 mm and the preference score. As shown in FIG. 11, no correlation was found between the arithmetic mean swell and the preference score.

Swell (Wd) by WaveScan-DOI (Trade Name)

FIG. 12 shows a relationship between the swell (Wd) by WaveScan-DOI (trade name) and the preference score. As shown in FIG. 12, a correlation was found between the swell and the preference score.

## Claims

1. A coating appearance evaluation method, wherein, among surface swells of a coating, the amplitude of the swell with a wavelength in the range of 1 to 10 mm are selectively measured, and a coating appearance of the surface of the coating is evaluated by the sizes of the resulting measurement thereof.

2. A coating appearance evaluation method comprising:

   evaluating the appearance of a coating based on a preference score S as an evaluation criterion obtained by adding information regarding consumer preference to at least one selected from:

   (a) an integral value ($\int_1^{10}Power(\lambda)d\lambda$) of a Power curve, which is a wavelength distribution of Power at a wavelength in the range of 1 to 10 mm by conducting Fourier transformation for three-dimensional surface roughness data of the coating, and defining a square of an amplitude of a swell with each wavelength as Power;
   (b) an arithmetic mean swell (Wa) with a wavelength in the range of 1 to 10 mm; and
   (c) a swell (Wd) determined by a coating appearance measuring machine "WaveScan-DOI (trade name)" from BYKGardner.

3. The coating appearance evaluation method according to claim 2, wherein the preference score S is at least one selected from the preference score S1 expressed by the expression (1), the preference score S2 expressed by the expression (2), and the preference score S3 expressed by the expression (3).

$$S1 = -0.518 Ln\{\int_1^{10} Power(\lambda) d\lambda\} + 1.2284 \quad \text{Expression (1)}$$

$$S2 = 4.9052 EXP^{-4.2213Wa} \quad \text{Expression (2)}$$

$$S3 = 4.6471 Wd^{-0.3041} \quad \text{Expression (3)}$$

4. A method for producing a coated article comprising a step of evaluating by the coating appearance evaluation method according to any one of claims 1 to 3.

5. A coated article obtained by coating a coated object, wherein a preference score S is 3.7 or more of a substantially horizontal part and 3.0 or more of a substantially vertical part, and the preference score S is obtained by adding information regarding consumer preference to at least one selected from:

   (a) an integral value ($\int_1^{10}Power(\lambda)d\lambda$) of a Power curve, which is a wavelength distribution of Power at a wavelength in the range of 1 to 10 mm by conducting Fourier transformation for three-dimensional surface roughness data of the coating, and defining a square of an amplitude of a swell with each wavelength as Power;
   (b) an arithmetic mean swell (Wa) with a wavelength in the range of 1 to 10 mm; and
   (c) a swell (Wd) determined by a coating appearance measuring machine "WaveScan-DOI (trade name)" from BYKGardner.

6. The coated article according to claim 5, wherein the coated article is an automotive body or an automotive part.

7. A program used in an apparatus for evaluating an appearance of a coating, the apparatus comprising:

   an input unit, in which information with respect to smoothness of a coating is input;
   a storage unit for storing arithmetic expressions expressed by the following expressions (1), (2) and (3) in advance, whereby a preference score S is calculated by adding information with respect to the consumer preference to the information with respect to smoothness of the coating;
   a computing unit for calculating a preference score S according to the arithmetic expression;
   a determining unit for determining acceptance when the preference score S is higher than a predetermined value; and
an output unit for outputting a determination result, wherein
the information with respect to the smoothness of the coating is defined as at least one selected from:

(a) an integral value ($\int_1^{10}$Power(λ)dλ) of a Power curve which is a wavelength distribution of Power at a wavelength in the range of 1 to 10 mm by conducting Fourier transformation for three-dimensional surface roughness data of the coating, and defining a square sum of an amplitude of a swell with each wavelength as Power;
(b) an arithmetic mean swell (Wa) with a wavelength of 1 to 10 mm; and
(c) a swell (Wd) determined by a coating appearance measuring machine "WaveScan-DOI (trade name)" from BYKGardner,

the following expressions (1), (2) and (3) are called from the storage unit appropriately, based on information input into an input means, S1 being calculated with the computing unit by applying the expression (1) when (a) is input, S2 being calculated with the computing unit by applying the expression (2) when (b) is input, S3 being calculated with the computing unit by applying the expression (3) when (c) is input, and
the respective S1, S2 and S3 calculated by determining whether or not these values are more than the predetermined value, and the determining result being output to the output unit, whereby executing the evaluation of the coating appearance by the computer.

$$S1 = -0.518 Ln\{\int_1^{10} Power(\lambda)\,d\lambda\} + 1.2284 \quad \text{Expression (1)}$$

$$S2 = 4.9052 EXP^{-4.2213Wa} \quad \text{Expression (2)}$$

$$S3 = 4.6471 Wd^{-0.3041} \quad \text{Expression (3)}$$

**8.** An apparatus for evaluating a coating appearance comprising:

an input unit in which information with respect to smoothness of the coating is input; storage for storing arithmetic expressions expressed by the following expressions (1), (2) and (3) in advance, whereby the preference score S is calculated by adding information with respect to the consumer preference to the information with respect to smoothness of the coating;
a computing unit for calculating a preference score S according to the arithmetic expression;
a determining unit for determining acceptance when the preference score S is higher than a predetermined value; and
an output unit for outputting a determination result, wherein
the information with respect to smoothness of the coating is defined as at least one selected from:

(a) an integral value ($\int_1^{10}$Power(λ)dλ) of a Power curve, which is a wavelength distribution of Power at a wavelength in the range of 1 to 10 mm by conducting Fourier transformation for three-dimensional surface roughness data of the coating, and defining a square sum of an amplitude of a swell with each wavelength as Power;
(b) an arithmetic mean swell (Wa) with a wavelength in the range of 1 to 10 mm; and
(c) a swell (Wd) determined by a coating appearance measuring machine "WaveScan-DOI (trade name)" from BYKGardner,

the following expressions (1), (2) and (3) being called from the storage unit appropriately, based on information input into a input means, S1 being calculated with the computing unit by applying the expression (1) when (a,) is input, S2 being calculated with the computing unit by applying the expression (2) when (b) is input, S3 being calculated with the computing unit by applying the expression (3) when (c) is input, and
the respective S1, S2 and S3 calculated, being determined whether or not the values thereof are more than a predetermined value, and the determined result being output to the determining unit.

$$S1 = -0.518 Ln\{\int_1^{10} Power(\lambda)\, d\lambda\} + 1.2284$$ Expression (1)

$$S2 = 4.9052 EXP^{-4.2213 W_a}$$ Expression (2)

$$S3 = 4.6471 Wd^{-0.3041}$$ Expression (3)

FIG. 1

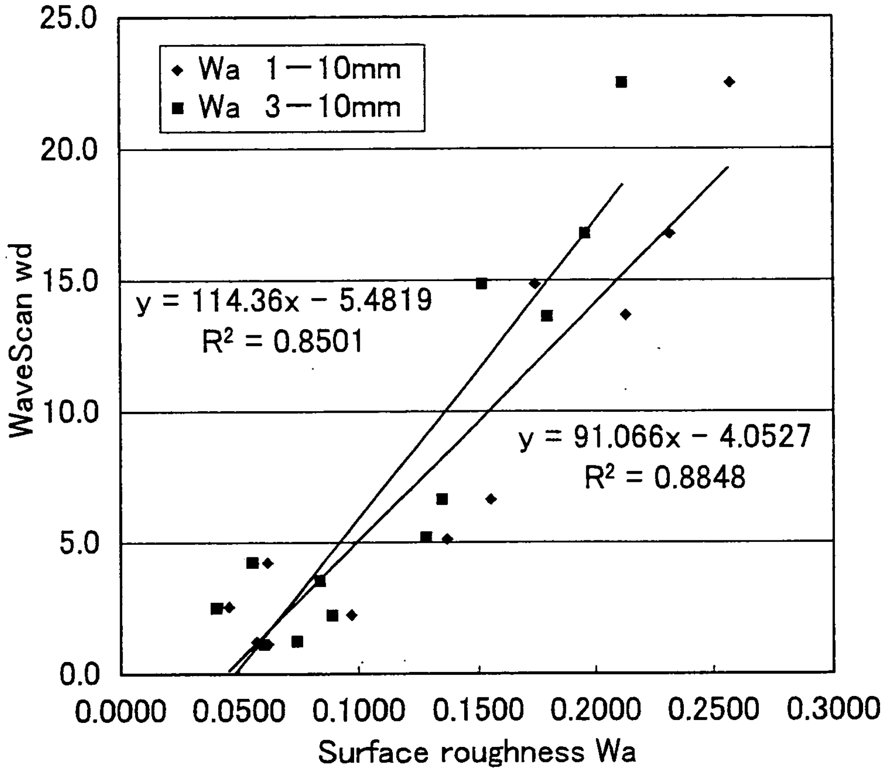

25.0
20.0
15.0
10.0
5.0
0.0
Wa 1—10mm
Wa 3—10mm
y = 114.36x - 5.4819
$R^2$ = 0.8501
y = 91.066x - 4.0527
$R^2$ = 0.8848
WaveScan wd
0.0000 0.0500 0.1000 0.1500 0.2000 0.2500 0.3000
Surface roughness Wa


FIG. 2

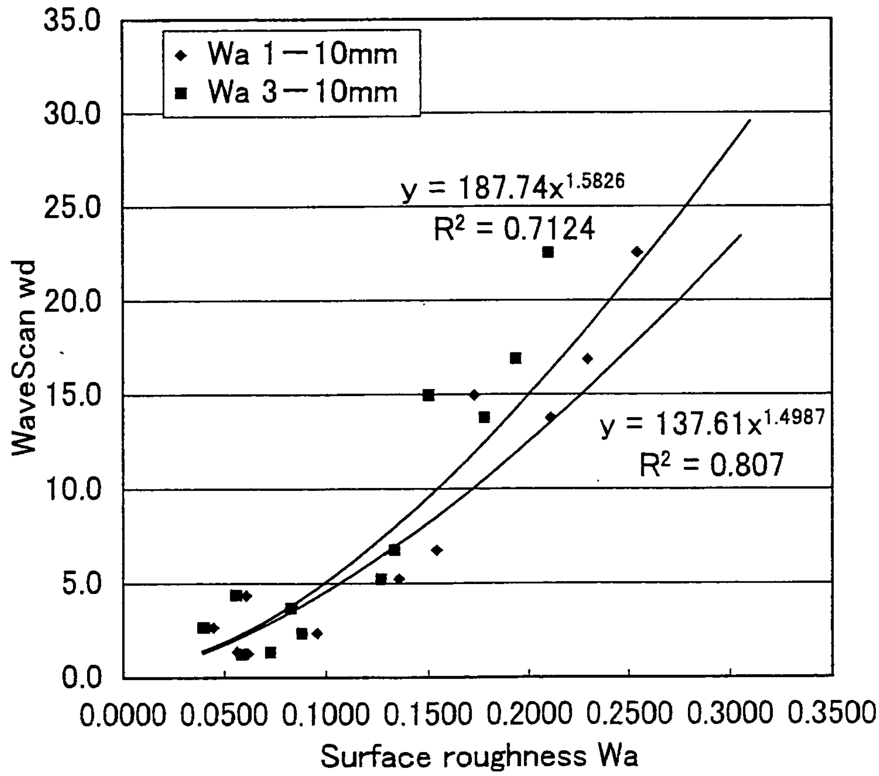

35.0
30.0
25.0
20.0
15.0
10.0
5.0
0.0
Wa 1—10mm
Wa 3—10mm
y = $187.74x^{1.5826}$
$R^2$ = 0.7124
y = $137.61x^{1.4987}$
$R^2$ = 0.807
WaveScan wd
0.0000 0.0500 0.1000 0.1500 0.2000 0.2500 0.3000 0.3500
Surface roughness Wa

FIG. 3

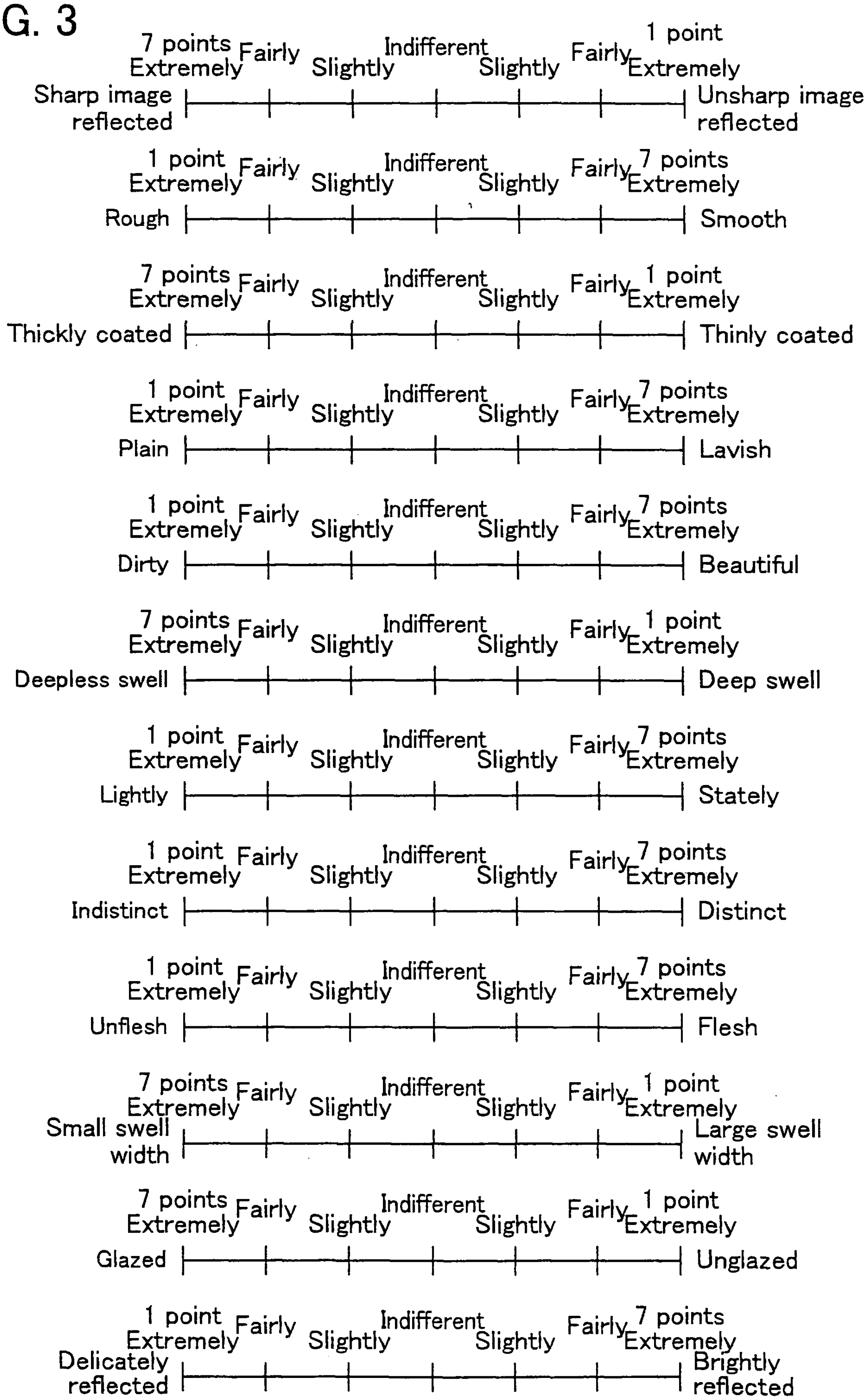
7 points Extremely
Fairly
Slightly
Indifferent
Slightly
Fairly
1 point Extremely
Sharp image reflected
Unsharp image reflected
1 point Extremely
Fairly
Slightly
Indifferent
Slightly
Fairly
7 points Extremely
Rough
Smooth
7 points Extremely
Fairly
Slightly
Indifferent
Slightly
Fairly
1 point Extremely
Thickly coated
Thinly coated
1 point Extremely
Fairly
Slightly
Indifferent
Slightly
Fairly
7 points Extremely
Plain
Lavish
1 point Extremely
Fairly
Slightly
Indifferent
Slightly
Fairly
7 points Extremely
Dirty
Beautiful
7 points Extremely
Fairly
Slightly
Indifferent
Slightly
Fairly
1 point Extremely
Deepless swell
Deep swell
1 point Extremely
Fairly
Slightly
Indifferent
Slightly
Fairly
7 points Extremely
Lightly
Stately
1 point Extremely
Fairly
Slightly
Indifferent
Slightly
Fairly
7 points Extremely
Indistinct
Distinct
1 point Extremely
Fairly
Slightly
Indifferent
Slightly
Fairly
7 points Extremely
Unflesh
Flesh
7 points Extremely
Fairly
Slightly
Indifferent
Slightly
Fairly
1 point Extremely
Small swell width
Large swell width
7 points Extremely
Fairly
Slightly
Indifferent
Slightly
Fairly
1 point Extremely
Glazed
Unglazed
1 point Extremely
Fairly
Slightly
Indifferent
Slightly
Fairly
7 points Extremely
Delicately reflected
Brightly reflected

# FIG. 4

| Unified term | | Factor No.1 | Factor No.2 |
|---|---|---|---|
| + ←→ | − | Factor loading | |
| Distinct | Indistinct | 0.98 | −0.16 |
| Lavish | Plain | 0.97 | 0.12 |
| Beautiful | Dirty | 0.96 | −0.27 |
| Smooth | Rough | 0.95 | −0.21 |
| Deepless swell | Deep swell | 0.95 | −0.32 |
| Sharp image reflected | Unsharp image reflected | 0.94 | −0.30 |
| Glazed | Unglazed | 0.94 | −0.28 |
| Stately | Lightly | −0.97 | 0.20 |
| Flesh | Unflesh | −0.86 | 0.41 |
| Thickly coated | Thinly coated | −0.74 | 0.54 |
| Brightly reflected | Delicately reflected | −0.10 | 0.96 |

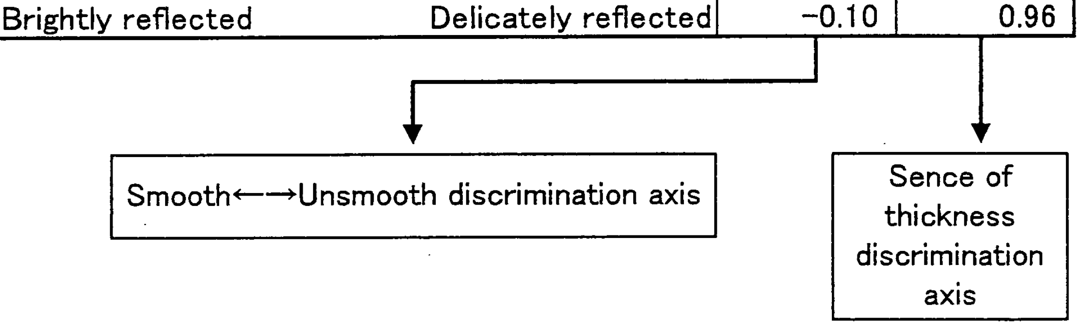


# FIG. 5

How do you feel about this coating finish in light of your preference ?

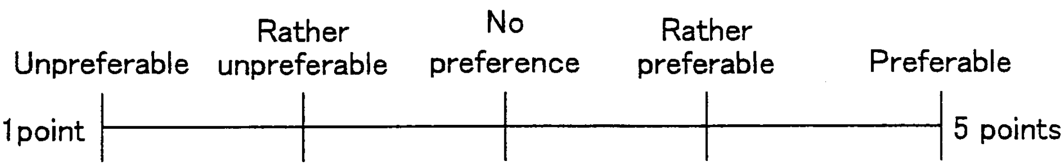

FIG. 6

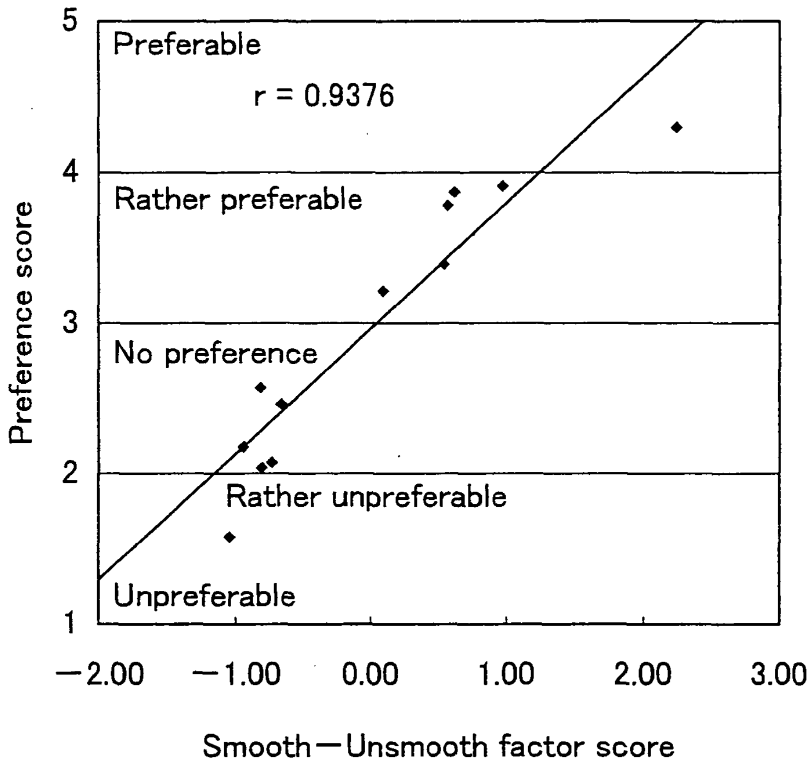
5
4
3
2
1
Preferable
r = 0.9376
Rather preferable
No preference
Rather unpreferable
Unpreferable
Preference score
−2.00
−1.00
0.00
1.00
2.00
3.00
Smooth−Unsmooth factor score

FIG. 7

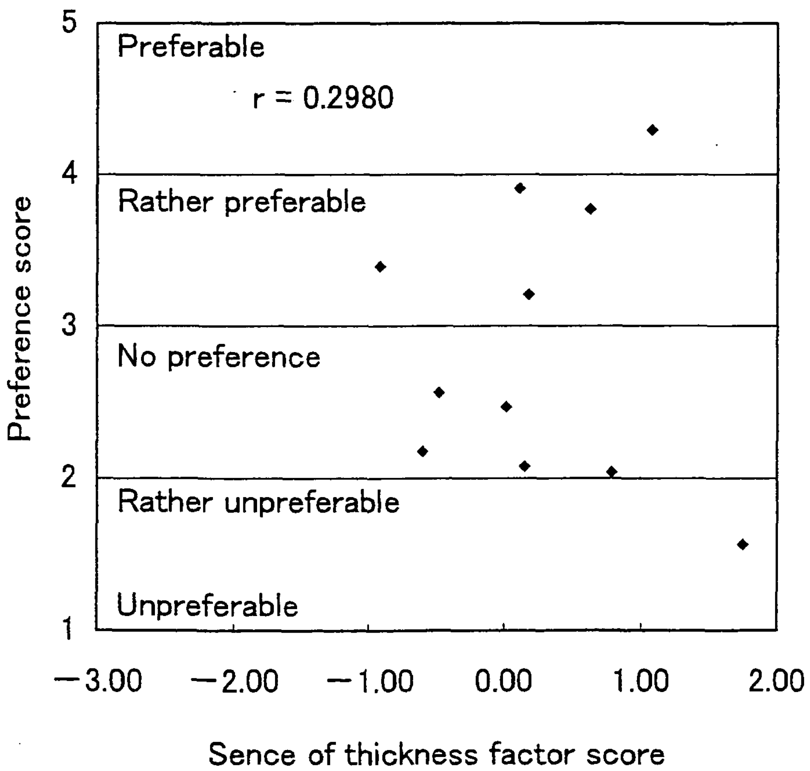
5
4
3
2
1
Preferable
r = 0.2980
Rather preferable
No preference
Rather unpreferable
Unpreferable
Preference score
−3.00
−2.00
−1.00
0.00
1.00
2.00
Sence of thickness factor score

FIG. 8

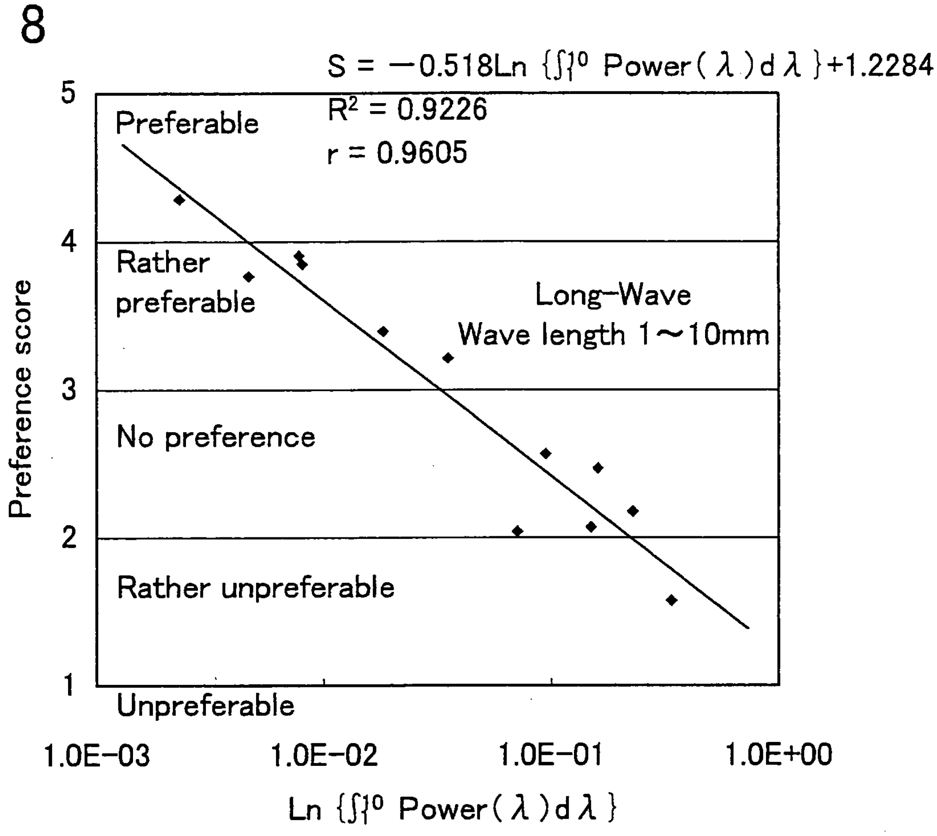
$S = -0.518Ln \{\int_1^{10} Power(\lambda)d\lambda\}+1.2284$
$R^2 = 0.9226$
r = 0.9605
Preferable
Rather preferable
No preference
Rather unpreferable
Unpreferable
Long-Wave
Wave length 1～10mm
Preference score
5
4
3
2
1
1.0E-03
1.0E-02
1.0E-01
1.0E+00
$Ln \{\int_1^{10} Power(\lambda)d\lambda\}$

FIG. 9

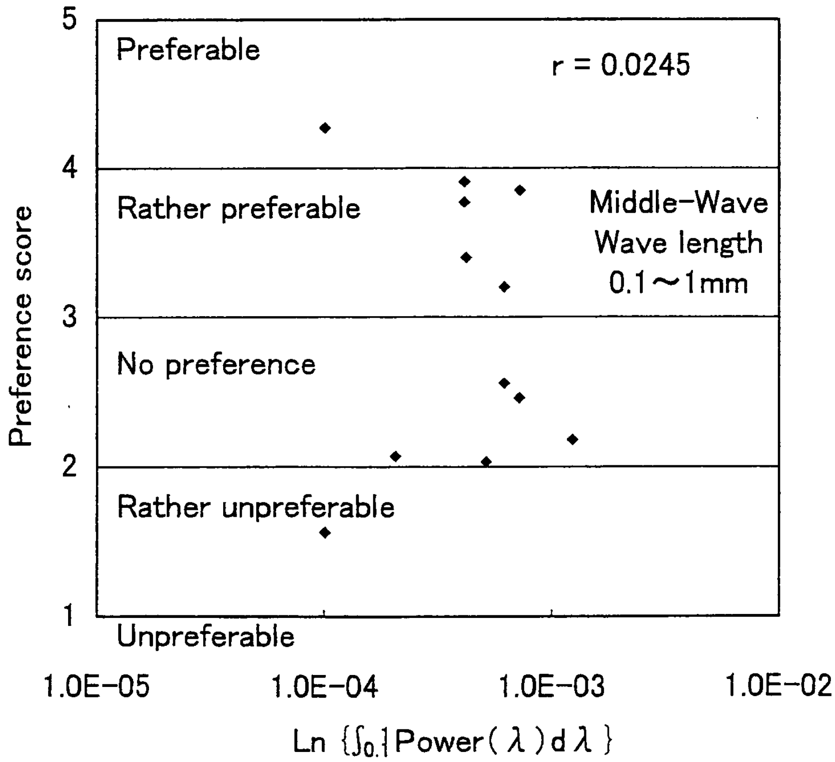
r = 0.0245
Preferable
Rather preferable
No preference
Rather unpreferable
Unpreferable
Middle-Wave
Wave length
0.1～1mm
Preference score
5
4
3
2
1
1.0E-05
1.0E-04
1.0E-03
1.0E-02
$Ln \{\int_{0.1}^{1} Power(\lambda)d\lambda\}$

FIG. 10

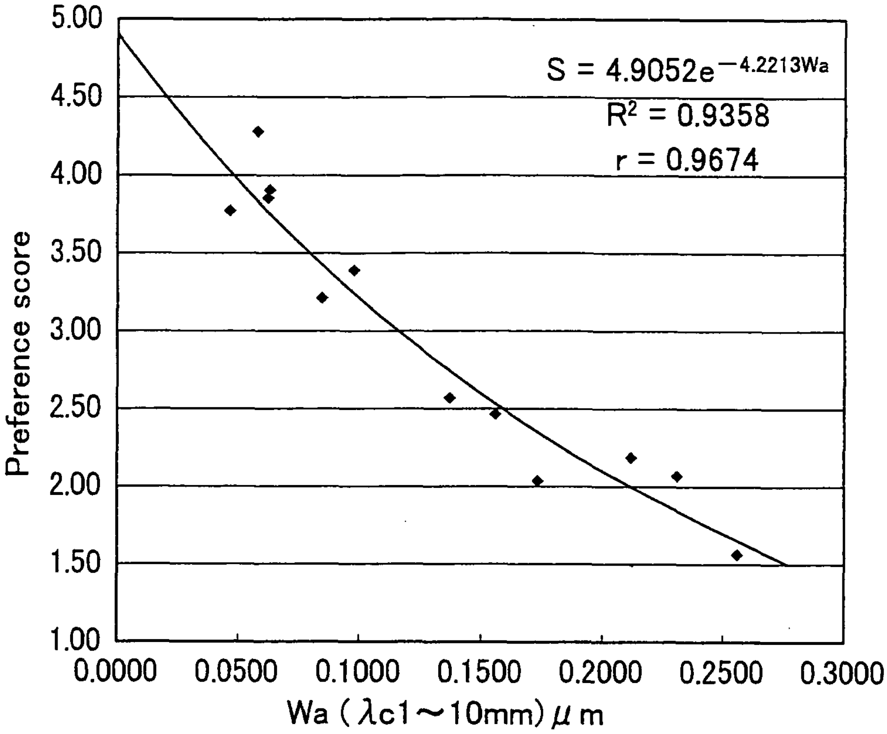
S = 4.9052e^−4.2213Wa
R² = 0.9358
r = 0.9674
Preference score
5.00
4.50
4.00
3.50
3.00
2.50
2.00
1.50
1.00
0.0000
0.0500
0.1000
0.1500
0.2000
0.2500
0.3000
Wa (λc1∼10mm) μm

FIG. 11

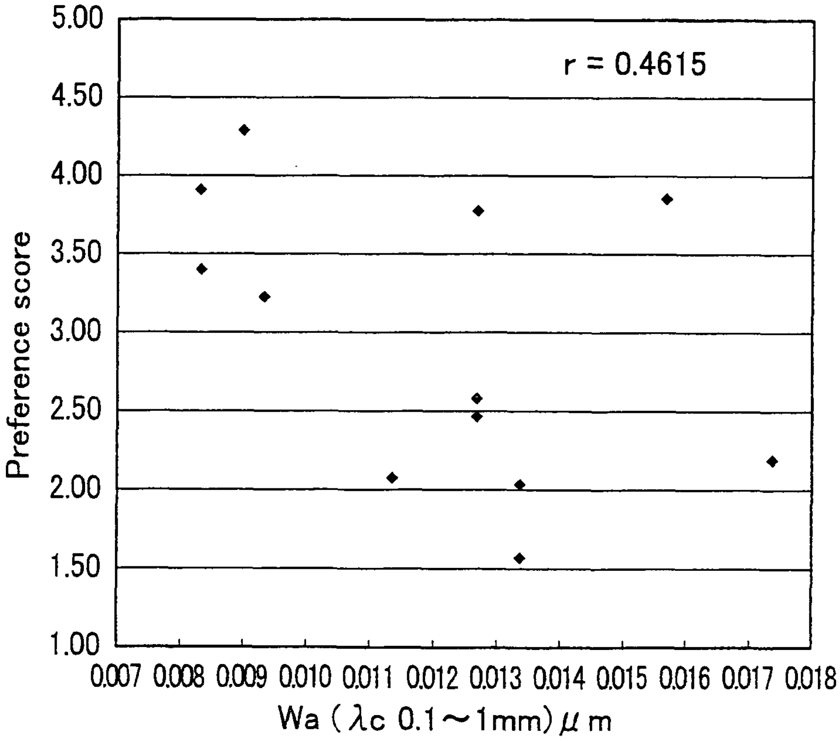
r = 0.4615
Preference score
5.00
4.50
4.00
3.50
3.00
2.50
2.00
1.50
1.00
0.007 0.008 0.009 0.010 0.011 0.012 0.013 0.014 0.015 0.016 0.017 0.018
Wa (λc 0.1∼1mm) μm

FIG. 12

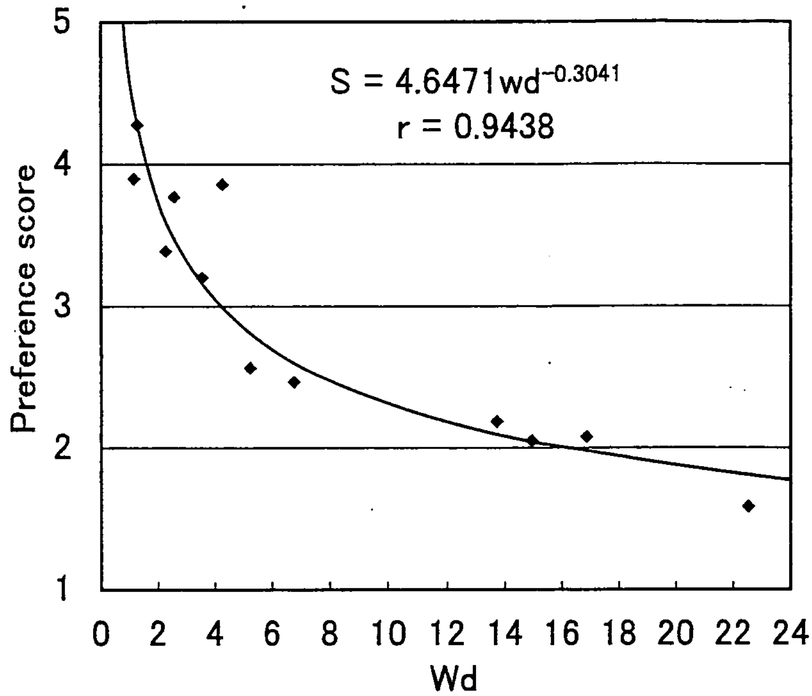
S = 4.6471wd^-0.3041
r = 0.9438
Preference score
5
4
3
2
1
0 2 4 6 8 10 12 14 16 18 20 22 24
Wd

**INTERNATIONAL SEARCH REPORT**

International application No.
PCT/JP2006/305382

A. CLASSIFICATION OF SUBJECT MATTER
*G01B21/30*(2006.01), *G01N21/84*(2006.01), *B05D3/00*(2006.01)

According to International Patent Classification (IPC) or to both national classification and IPC

B. FIELDS SEARCHED

Minimum documentation searched (classification system followed by classification symbols)
*G01B5/00-7/34*(2006.01), *G01B11/00-11/30*(2006.01), *G01B21/00-21/32*(2006.01), *G01N21/84-21/958*(2006.01), *B05C11/00*(2006.01), *B05C21/00*(2006.01), *B05D3/00*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2-271211 A (Nissan Motor Co., Ltd.),<br>06 November, 1990 (06.11.90),<br>Full text; all drawings<br>& US 5092676 A | 1-2,4<br>3,7-8 |
| A | JP 7-306016 A (Nissan Motor Co., Ltd.),<br>21 November, 1995 (21.11.95),<br>Par. Nos. [0021] to [0023]; Figs. 5 to 6<br>(Family: none) | 1-4,7-8 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>09 May, 2006 (09.05.06) | Date of mailing of the international search report<br>16 May, 2006 (16.05.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/305382

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☒ Claims Nos.: 5-6
because they relate to parts of the international application that do not comply with the prescribed requirements to such an extent that no meaningful international search can be carried out, specifically:
No specific method of manufacturing a "coated article" satisfying the condition that "the preference score S is 3.7 or more in the generally horizontal portion and 3.0 or more in the generally vertical portion" is disclosed in the description. Therefore, claims 5-6 is (Continued to extra sheet.)

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.
2. ☐ As all searchable claims could be searched without effort justifying an additional fee, this Authority did not invite payment of any additional fee.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

INTERNATIONAL SEARCH REPORT

International application No.
PCT/JP2006/305382

Continuation of Box No.II-2 of continuation of first sheet(2)

not supported by the disclosure of the description within the meaning of PCT Article 6, and the description lacks disclosure within the meaning of PCT Article 5.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2588297 B
- JP 11194096 A